# FASCICULE DE BREVET EUROPEEN

(11) **EP 0 967 425 B1**
(45) Date de publication et mention de la délivrance du brevet: **14.08.2002**
(21) Numéro de dépôt: 99401559.2
(22) Date de dépôt: 23.06.1999
(51) Int. Cl.: F16L 5/14

(54) **Dispositif de traversée de paroi**
Vorrichtung zur Wanddurchführung
Device for a wall opening

(30) Priorité: 25.06.1998 FR 9808079
(43) Date de publication de la demande: 29.12.1999
(73) Titulaire: Société SYLEA, 78190 Montigny le Bretonneux (FR)
(72) Inventeur: Chretien, Louis, 92500 Rueil Malmaison (FR); Warscotte, Franck, 92000 Nanterre (FR); Mathey, Jean-Marc, 75014 Paris (FR)
(74) Mandataire: Faber, Jean-Paul

(56) Documents cités:
- DE-B- 1 166 567
- US-A- 3 758 916

## Description

La présente invention se rapporte à un arrangement comprenant un faisceau de câblage et un dispositif de traversée de parois.

L'invention vise un ensemble destiné à être inséré dans une ouverture du tablier séparant le compartiment moteur de l'habitacle et permettant de protéger les ensembles de conducteurs électriques qui relient les différents organes du compartiment moteur aux différents appareils de contrôle, d'éclairage, etc...

De tels dispositifs doivent répondre à un certain nombre d'impératifs. Ils doivent être simples et rapides à mettre en place, ils doivent parfaitement protéger le câblage, assurer l'étanchéité entre le compartiment moteur et l'habitacle et également présenter des qualités d'isolation acoustiques afin d'éviter de transmettre les bruits depuis le compartiment moteur vers l'habitacle.

L'invention a pour but de réaliser un dispositif qui réponde à tous ces critères.

Le dispositif, selon l'invention, est du type constitué d'un corps à travers lequel passe un faisceau de câblage et destiné à être engagé dans une ouverture de ladite paroi, ledit corps présentant, à une extrémité, un épaulement destiné à coopérer avec une face correspondante de ladite paroi, des moyens étant prévus pour assurer la fixation dudit corps sur la paroi et est caractérisé en ce que le corps est directement surmoulé sur le faisceau de câblage et son extrémité, opposée à celle comportant l'épaulement, est pourvue d'un anneau solidarisé avec ledit corps lors du surmoulage et présentant des rampes hélicoïdales d'un système d'assemblage à baïonnettes, tandis que les moyens pour assurer la fixation dudit corps sur la paroi comprennent une bague comportant, sur sa surface interne, des tétons destinés à coopérer avec les rampes et formant le moyen complémentaire du système d'assemblage à baïonnettes, ladite bague étant destinée, par son extrémité libre, à porter contre la face de la paroi opposée à celle contre laquelle bute l'épaulement.

De préférence, l'anneau est réalisé en deux parties, chaque partie présentant des talons pour son ancrage dans le corps. Ainsi, on facilite le montage du câblage dans la bague puisque celui-ci peut être placé avant que les deux parties soient assemblées.

Afin que les deux parties soient parfaitement solidarisées avec le corps, chaque partie de l'anneau présente des cavités s'ouvrant sur la face interne avec des encoches dirigées vers les talons.

De préférence, l'épaulement présente, sur sa face destinée à coopérer avec la paroi, une saillie. Ainsi, lors de la fixation, la saillie s'écrase légèrement ce qui forme un joint.

Suivant un détail constructif, l'épaulement est terminé par un relief. Ainsi, lorsqu'on utilise du polyuréthane pour la réalisation du corps, les bulles qui se forment lors du moulage viennent jusqu'au relief en évitant qu'elles s'accumulent dans d'autres endroits ce qui pourrait être gênant.

Suivant un détail constructif, le corps présente, au voisinage de l'épaulement, un bourrelet. Ainsi, lorsqu'on met en place le corps, le bourrelet, en coopérant avec la paroi, maintient ledit corps dans la bonne position pour sa fixation.

De préférence, dans le corps est noyé un boudin extractible. Ainsi, si on doit ajouter, après la pose du dispositif, des conducteurs supplémentaires, on retire le boudin et on fait passer ceux-ci à travers le conduit ainsi ménagé.

Suivant une variante de réalisation, le corps comporte, noyées, des séries de barrettes bonnes conductrices de l'électricité et dont les extrémités débouchent dans le fond de l'élément de boîtier pour former des organes mâles de contact électrique. On peut ainsi, après la pose du dispositif, effectuer des branchements supplémentaires.

Afin, de faciliter le serrage de la bague, cette dernière comporte des oreilles.

Suivant un détail constructif, le corps comporte, au voisinage de l'anneau, un voile latéral et la bague comporte, sur sa surface interne, un jonc destiné à porter contre le voile.

Enfin, dans le cas où la paroi comporte, sur sa face opposée à celle avec laquelle coopère la saillie de l'épaulement, un revêtement, la bague présente un rebord dont la face tournée en regard du revêtement est pourvue d'un ressaut circulaire destiné à porter contre le revêtement.

L'invention va maintenant être décrite avec plus de détails en se référant à des modes de réalisation particuliers donnés à titre d'exemple seulement et représentés aux dessins annexés, dans lesquels :
Figure 1 est une vue en perspective éclatée du dispositif, selon l'invention.
Figure 2 est une vue en perspective d'une partie de l'anneau.
Figure 3 est une vue en plan de la partie de l'anneau de la figure 2.
Figure 4 est une vue en coupe axiale du dispositif de la figure 1.
Figure 5 est une vue agrandie d'un détail de réalisation.
Figure 6 est une vue en coupe axiale montrant une variante.

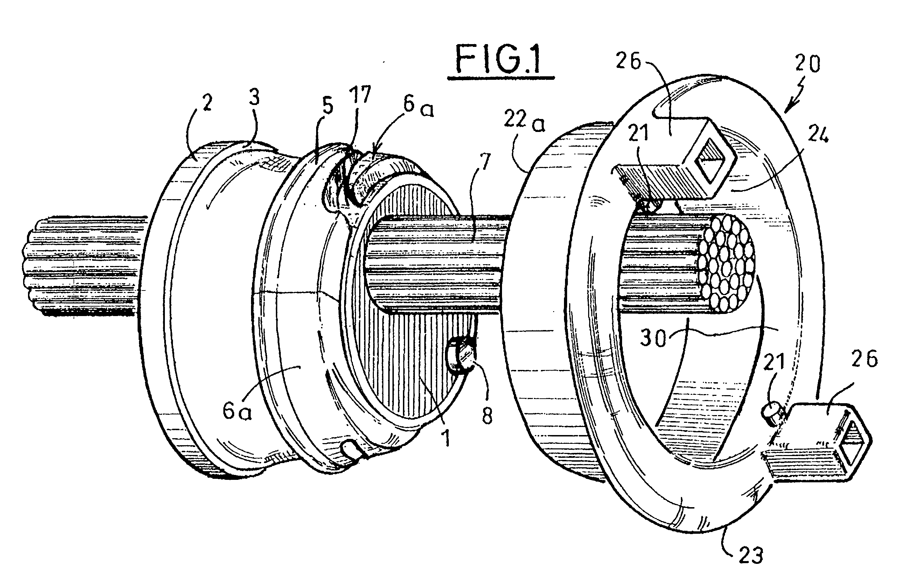

Le dispositif représenté aux figures 1 à 5 est formé d'un premier élément 1 se présentant sous la forme d'un corps en matière plastique moulée telle que du polyuréthane qui présente l'avantage de présenter une certaine résistance mécanique et également de constituer un bon isolant acoustique.

Le corps 1 est conformé pour, à une extrémité 1a, présenter un épaulement périphérique 2 avec une légère saillie 3 tournée du côté de l'autre extrémité 1b. On sait que, dans les moulages en polyuréthane, il se forme souvent des bulles qui ont tendance à remonter à la surface. L'épaulement 2 est terminé par un relief 2a qui permet de capter des bulles à un endroit où leur présence n'a aucune importance.

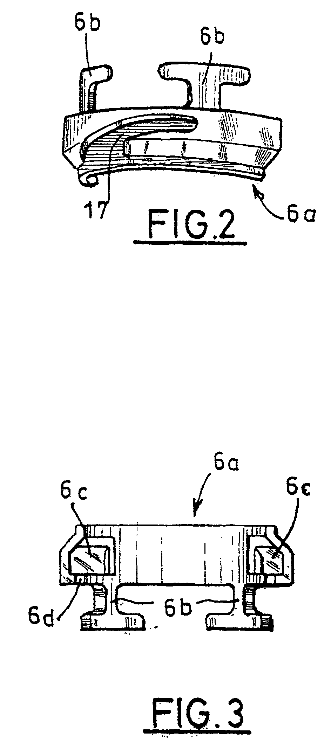

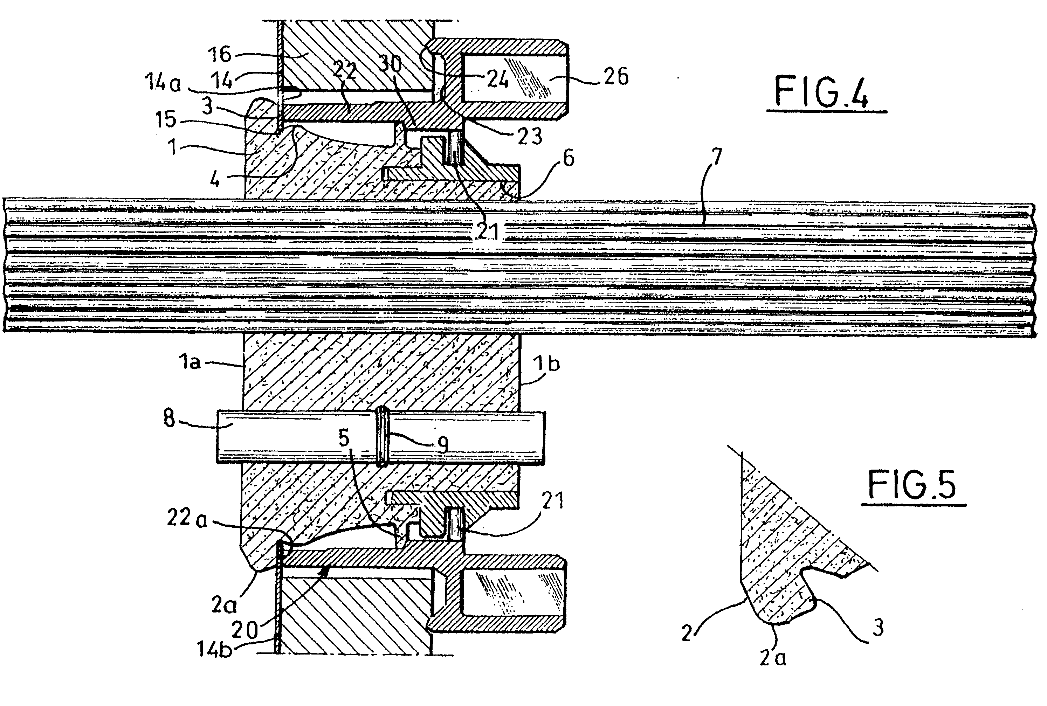

La paroi latérale du corps 1, au voisinage de l'épaulement 2, présente un bourrelet 4 et, à une certaine distance de celui-ci, un voile 5, tandis qu'au voisinage de l'extrémité 1b, ladite paroi latérale est solidaire d'un anneau 6. L'anneau 6 (voir figures 2 et 3) est formé de deux parties identiques 6a en forme d'arc de cercle s'étendant sur 180°. Chaque partie 6a présente deux talons 6b et deux cavités internes 6c, avec des encoches 6d. Chaque partie 6a présente une rainure 17 constituant l'un des éléments d'un montage à baïonnette.

Lors du moulage du corps 1, on insère dans celui-ci un faisceau de câblage 7 qui se trouve ainsi, dans sa partie traversant ledit corps 1, noyé dans la matière plastique ce qui assure une parfaite étanchéité. Lors dudit moulage, l'anneau 6, formé des deux parties 6a, est inséré dans le moule, les talons 6b sont ainsi noyés dans la matière qui pénètre aussi dans les cavités 6c afin que ledit anneau soit parfaitement solidarisé au corps 1. Grâce au fait que l'anneau soit en deux parties 6a, on n'a pas besoin d'enfiler le câblage comme cela serait nécessaire s'il était en une seule pièce.

Egalement, on peut insérer dans le corps un boudin 8 qui présente, en un point intermédiaire de sa longueur, une saillie périphérique 9. Ce boudin est réalisé en un matériau plastique qui ne permet pas de se lier à la matière constituant le corps 1.

Ce boudin 8 peut être retiré afin de former un passage pour des conducteurs supplémentaires. Si on n'a pas de conducteurs à ajouter, le boudin est maintenu dans le corps 1.

La référence 14 désigne la paroi séparant le compartiment moteur de l'habitacle et qui est percée d'une ouverture 15 pour le passage du corps 1, l'une des faces 14a de la paroi 14 étant solidaire d'un revêtement 16 anti-bruit.

Comme on le voit à la figure 4, l'ouverture 15 a un diamètre qui correspond à celui du bourrelet 4 de manière que le corps 1, engagé dans ladite ouverture 15, se maintienne de lui-même et ne risque pas de basculer.

La phase 14b de la paroi 14 vient porter contre la saillie 3 (voir figure 4).

Le dispositif est complété par une bague de fixation 20 qui comprend un corps cylindrique 22 dont une extrémité 22a est destinée à coopérer avec la face 14a de la paroi 14, tandis que l'autre extrémité présente un rebord 23, la face externe de celui-ci étant pourvue de deux oreilles 26 pour faciliter la préhension et le serrage de la bague.

La bague 20, intérieurement, est pourvue de deux tétons 21 décalés angulairement de 180° et qui sont destinés à coopérer avec les rainures 17 et qui forment la partie complémentaire de l'assemblage à baïonnette.

Le rebord 23, au voisinage de sa périphérie et du côté tourné vers l'extrémité 22a du corps 22, est pourvu d'un ressaut circulaire 24 destiné à coopérer avec la face libre du revêtement.

Le corps cylindrique 22 de la bague 20, intérieurement, présente un jonc 30 destiné à porter contre le voile 5.

Le dispositif se place d'une manière très simple sur la paroi 14, le corps du premier élément 1 étant engagé dans l'ouverture 15 du côté de la paroi 14 opposé à la face 14a de manière que la saillie 3 porte contre ladite paroi, on place ensuite la bague 20 en engageant les tétons 21 dans les rainures 17 et on fait tourner celle-ci jusqu'à son blocage.

Lorsque la bague 20 est bloquée, l'extrémité 22a du corps 22 bute contre la face 14a de la paroi 14 de sorte que le dispositif se trouve parfaitement fixé sur la paroi 14, tandis que le jonc 30 porte contre le voile 5 et le ressaut 24 coopère avec le revêtement 16. ces différents éléments assurant une bonne isolation acoustique.

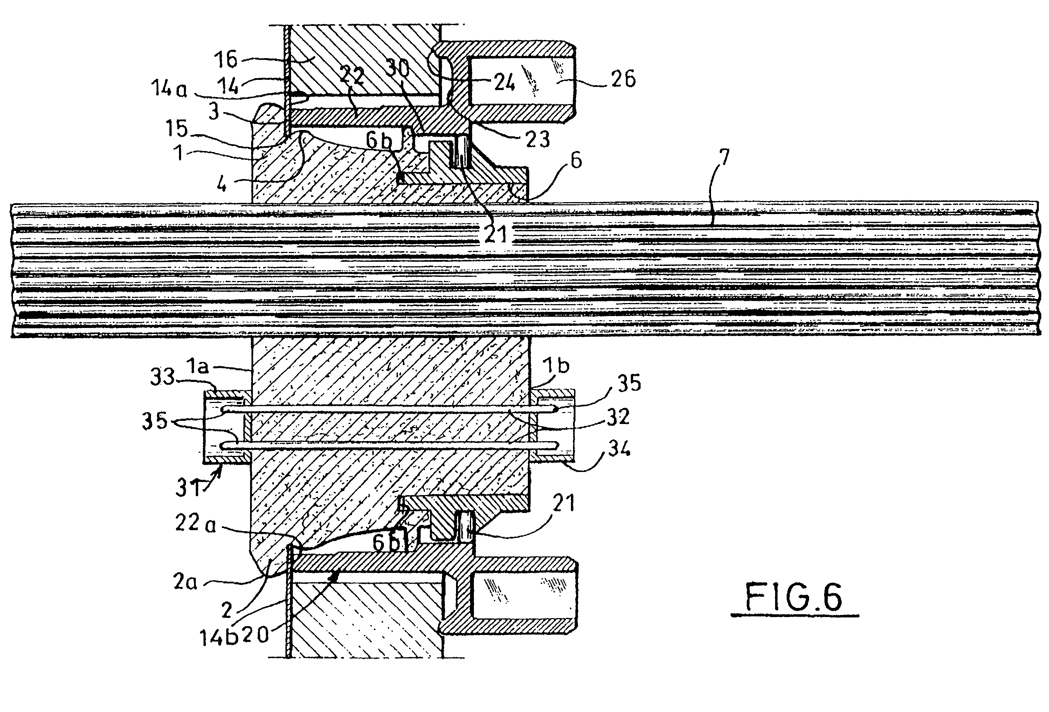

A la figure 6, on a représenté une variante de réalisation. Pour la description de cette figure, on a reporté les références utilisées pour les figures précédentes pour désigner les éléments correspondants.

Avant le moulage, on place dans le moule un organe 31 comprenant une série de barrettes bonnes conductrices de l'électricité 32 et dont une extrémité est solidaire d'un élément de boîtier femelle 33, tandis que l'autre extrémité est solidaire d'un élément de boîtier femelle 34. Les extrémités libres des barrettes 32 forment, dans le fond der éléments de boîtier 33 et 34, des languettes 35 constituant des organes mâles de contact électrique et sur lesquels peuvent être enfichés des organes de contact électrique femelles. Ces organes de contact électrique femelles peuvent être logés dans des éléments de boîtier complémentaires des éléments de boîtier 33 et 34.

Cette disposition permet, après que le dispositif ait été posé, de pouvoir effectuer des branchements supplémentaires si cela est nécessaire.

## Revendications

1. Arrangement comprenant un faisceau de cablage et un dispositif de traversée de parois du type constitué d'un corps (1) à travers lequel passe un faisceau de câblage (7) et destiné à être engagé dans une ouverture (15) de ladite paroi (14), ledit corps (1) présentant, à une extrémité, un épaulement (2) destiné à coopérer avec une face correspondante de ladite paroi (14), des moyens étant prévus pour assurer la fixation dudit corps (1) sur la paroi, **caractérisé en ce que** le corps est directement surmoulé sur le faisceau de câblage et son extrémité opposée à celle comportant l'épaulement (2) est pourvue d'un anneau (6) solidarisé avec ledit corps (1) lors du surmoulage et présentant des rampes hélicoïdales d'un système d'assemblage à baïonnettes, tandis que les moyens pour assurer la fixation dudit corps (1) sur la paroi (14) comprennent une bague (20) comportant, sur sa surface interne, des tétons (21) destinés à coopérer avec les rampes et formant le moyen complémentaire du système d'assemblage à baïonnettes, ladite bague étant destinée, par son extrémité libre, à porter contre la face (14a) de la paroi (14) opposée à celle contre laquelle bute l'épaulement (2).

2. Arrangement, selon la revendication 1, **caractérisé en ce que** l'anneau (6) est réalisé en deux parties (6a), chaque partie présentant des talons (6b) pour son ancrage dans le corps (1).

3. Arrangement, selon les revendications 1 et 2, **caractérisé en ce que** chaque partie (6a) de l'anneau présente des cavités (6c) s'ouvrant sur la face interne avec des encoches (6d) dirigées vers les talons (6b).

4. Arrangement, selon la revendication 1, **caractérisé en ce que** l'épaulement (2) présente, sur sa face destinée à coopérer avec la paroi (14), une saillie (3).

5. Arrangement, selon la revendication 1, **caractérisé en ce que** l'épaulement (2) est terminé par un relief (2a).

6. Arrangement, selon la revendication 1, **caractérisé en ce que** le corps (1) présente, au voisinage de l'épaulement, un bourrelet (4).

7. Arrangement, selon la revendication 1, **caractérisé en ce que** dans le corps (1) est noyé un boudin (8) extractible.

8. Arrangement, selon la revendication 1, **caractérisé en ce que** le corps (1) comporte, noyées, des séries de barrettes (32) bonnes conductrice de l'électricité et dont les extrémités débouchent dans le fond de l'élément de boîtier (33, 34) pour former des organes mâles de contact électrique (35).

9. Arrangement, selon la revendication 1, **caractérisé en ce que** la bague (20) comporte des oreilles (26).

10. Arrangement, selon la revendication 1, **caractérisé en ce que** le corps (1) comporte, au voisinage de l'anneau (6), un voile (5) latéral et la bague comporte, sur sa surface interne, un jonc (30) destiné à porter contre le voile.

11. Arrangement, selon la revendication 1 et dans lequel la paroi (14) comporte, sur sa face (14a) opposée à celle avec laquelle coopère la saillie (3) de l'épaulement (2), un revêtement (16), **caractérisé en ce que** la bague (20) présente un rebord (23) dont la face, tournée en regard du revêtement, est pourvue d'un ressaut circulaire (24) destiné à porter contre le revêtement.

## Claims

1. An arrangement comprising a cable set and a wall feedthrough device of the type formed by a body (1) through which a cable set (7) passes and intended to be engaged in an opening (15) in the said wall (14), the said body (1) having, at one end, a shoulder (2) intended to cooperate with a corresponding face of the said wall (14), means being provided to ensure the attachment of the said body (1) onto the wall,
**characterised in that** the body is directly moulded onto the cable set and its end opposite to that comprising the shoulder (2) is provided with a ring (6) joined to the said body (1) during the moulding and having helicoidal ramps of a bayonet assembly system, whereas the means for ensuring the attachment of the said body (1) onto the wall (14) comprise a collar (20) having, on its internal surface, dog points (21) intended to cooperate with the ramps and forming the complementary means of the bayonet assembly system, the said collar being intended to bear, by its free end, against the face (14a) of the a wall (14) opposite that against which the shoulder (2) abuts.

2. An arrangement according to Claim 1,
**characterised in that** the ring (6) is made from two parts (6a), each part having projections (6b) for its anchoring in the body (1).

3. An arrangement according to Claims 1 and 2,
**characterised in that** each part (6a) of the ring has cavities (6c) opening onto the internal face with notches (6d) directed towards the projections (6b).

4. An arrangement according to Claim 1,
**characterised in that** on its face intended to cooperate with the wall (14) the shoulder (2) has a projection (3).

5. An arrangement according to Claim 1,
**characterised in that** the shoulder (2) ends in a relief (2a).

6. An arrangement according to Claim 1,
**characterised in that** the body (1) has a rim (4) in the vicinity of the shoulder.

7. An arrangement according to Claim 1,
**characterised in that** an extractable flange (8) is embedded in the body (1).

8. An arrangement according to Claim 1,
**characterised in that** the body (1) comprises embedded series of small bars (32) which are good conductors of electricity and the ends of which open into the base of the housing element (33, 34) to form male electric contact members (35).

9. An arrangement according to Claim 1,
**characterised in that** the collar (20) comprises lugs (26).

10. An arrangement according to Claim 1,
**characterised in that** in the vicinity of the ring (6) the body (1) comprises a lateral deformation (5) and the ring comprises, on its internal surface, a snap ring (30) intended to bear against the deformation.

11. An arrangement according to Claim 1 and in which the wall (14) comprises, on its face (14a) opposite that with which the projection (3) of the shoulder (2) cooperates, a lining (16),
**characterised in that** the collar (20) has an edge (23), the face, turned towards the lining, of which is provided with a circular projection (24) intended to bear against the lining.

## Patentansprüche

1. Anordnung mit einem Kabelbündel und einer Vorrichtung zur Wanddurchführung, gebildet durch einen Körper (1), durch den sich ein Kabelbündel (7) hindurch erstreckt und der dazu vorgesehen ist, in eine Öffnung (15) der genannten Wand (14) eingesetzt zu werden, wobei genannter Körper (1) an einem Ende einen Bund (2) aufweist, der zur Zusammenwirkung mit einer entsprechenden Seite der genannten Wand (14) vorgesehen ist, und Mittel vorgesehen sind, um die Befestigung des genannten Körpers (1) an der Wand sicherzustellen, **dadurch gekennzeichnet, dass** der Körper unmittelbar auf das Kabelbündel aufgegossen ist und sein Ende, das dem den Bund (2) aufweisenden entgegengesetzt ist, mit einem Reif (6) versehen ist, der mit dem genannten Körper (1) während des Gießens verbunden ist und schraubenartige Rampen eines Bajonettverschlußsystemes aufweist, während die Mittel zur Sicherstellung der Befestigung des genannten Körpers (1) an der Wand (14) einen Ring (20) aufweisen, der an seiner Innenseite Zapfen (21) aufweist, die zur Zusammenwirkung mit den Rampen vorgesehen sind und das Komplementärmittel für das Bajonettverschlußsystem bilden, wobei genannter Ring dazu vorgesehen ist, sich mit seinem freien Ende gegen diejenige Seite (14a) der Wand (14) abzustützen, die derjenigen entgegengesetzt ist, gegen die sich der Bund (2) abstützt.

2. Anordnung nach Anspruch 1, **dadurch gekennzeichnet, dass** der Reif (6) aus zwei Teilen (6a) gebildet ist, von denen jeder Teil Ansätze (6b) für seine Verankerung im Körper (1) aufweist.

3. Anordnung nach den Ansprüchen 1 und 2, **dadurch gekennzeichnet, dass** jeder Teil (6a) des Reifes Hohlräume (6c) aufweist, die sich zur Innenseite hin mit Aussparungen (6d) öffnen, die gegen die Ansätze (6b) hin gerichtet sind.

4. Anordnung nach Anspruch 1, **dadurch gekennzeichnet, dass** der Bund (2) auf seiner für die Zusammenwirkung mit der Wand (14) vorgesehenen Seite einen Vorsprung (3) aufweist.

5. Anordnung nach Anspruch 1, **dadurch gekennzeichnet, dass** der Bund (2) in einer Erhebung (2a) endigt.

6. Anordnung nach Anspruch 1, **dadurch gekennzeichnet, dass** der Körper (1) in der Nähe des Bundes einen Wulst (4) aufweist.

7. Anordnung nach Anspruch 1, **dadurch gekennzeichnet, dass** in den Körper (1) ein herausziehbarer Stab (8) eingebettet ist.

8. Anordnung nach Anspruch 1, **dadurch gekennzeichnet, dass** der Körper (1) eine Reihe von in ihn eingebetteter Leisten (32) aufweist, die Elektrizität gut leiten und deren Enden in den Bodenteil eines Gehäuseelementes (33, 34) einmünden, um stiftartige elektrische Kontaktorgane (35) zu bilden.

9. Anordnung nach Anspruch 1, **dadurch gekennzeichnet, dass** der Ring (20) zwei Griffstücke (26) aufweist.

10. Anordnung nach Anspruch 1, **dadurch gekennzeichnet, dass** der Körper (1) in der Nähe des Reifes (6) einen seitlichen Flügel (5) aufweist und dass der Ring an seiner Innenfläche einen Ringkörper (30) aufweist, der zur Anlage an den Flügel vorgesehen ist.

11. Anordnung nach Anspruch 1, bei der die Wand (14) auf ihrer Seite (14a), die derjenigen entgegengesetzt ist, mit der der Vorsprung (3) des Bundes (2) zusammenwirkt, eine Verkleidung (16) aufweist, **dadurch gekennzeichnet, dass** der Ring (20) einen Außenrand (23) aufweist, dessen Seite, welche der Verkleidung zugekehrt ist, mit einer kreisrunden Auskragung (24) versehen ist, die zur Anlage an der Verkleidung bestimmt ist.
